# FASCICULE DE BREVET EUROPEEN

(11) **EP 2 460 322 B1**
(45) Date de publication et mention de la délivrance du brevet: **19.08.2015**
(21) Numéro de dépôt: 10737044.7
(22) Date de dépôt: 26.07.2010
(51) Int. Cl.: H04L 12/701, H04L 12/725

(54) **PROCEDE ET SYSTEME POUR LA SELECTION AUTOMATIQUE DE MEDIA DE TRANSMISSION**
VERFAHREN UND SYSTEM ZUR AUTOMATISCHEN AUSWAHL VON ÜBERTRAGUNGSMEDIEN
METHOD AND SYSTEM FOR THE AUTOMATIC SELECTION OF TRANSMISSION MEDIA

(30) Priorité: 31.07.2009 FR 0903791
(43) Date de publication de la demande: 06.06.2012
(73) Titulaire: THALES, 92200 Neuilly-sur-Seine (FR)
(72) Inventeur: CRAMBERT, Philippe, F-92700 Colombes (FR); MALICE, Alain, F-92700 Colombes (FR)
(74) Mandataire: Lucas, Laurent Jacques
(86) Numéro de dépôt international: PCT/EP2010/060782
(87) Numéro de publication internationale: WO 2011/012569

(56) Documents cités:
- EP-A1- 1 583 287
- WO-A2-99/33232
- FR-A1- 2 922 397
- US-A1- 2003 206 528
- US-A1- 2005 286 452

## Description

La présente invention concerne un procédé de sélection de média de transmission au sein d'une infrastructure comportant au moins un réseau filaire utilisant le protocole IP (« Internet Protocol ») et une pluralité de systèmes de communication ayant des caractéristiques variées, notamment en termes de débit et de latence. Elle concerne également le système mettant en oeuvre ce procédé.

L'invention s'applique, par exemple, dans le domaine naval où les besoins en communication sont nombreux, du fait du nombre important de personnes pouvant embarquer sur un bateau. De plus, un bateau permet de disposer de nombreux systèmes de communications sans fils différents car l'encombrement y est moins critique que sur des véhicules terrestres ou aériens.

Lorsque plusieurs systèmes de communications sans fil sont disponibles, tels que des systèmes de transmission Haute Fréquence (HF), Ultra Haute Fréquence (UHF), des systèmes de transmission par satellite ou encore des systèmes de transmission haut débit par voie hertzienne tels que le système WIMAX (« Worldwide Interoperability for Microwave Access »), le problème se pose de la sélection d'une liaison de communication pour acheminer les paquets de données que l'on souhaite transmettre vers cette liaison. En effet, ces différents systèmes possèdent des caractéristiques propres et les besoins de communication, notamment en termes de débit et de qualité de service peuvent différer selon l'utilisateur ou le type de messages transmis. Pour une application donnée, par exemple une application de vidéoconférence, d'audioconférence ou de courrier électronique, les besoins en débit et les contraintes sur la latence de la transmission ne sont pas les mêmes. Intrinsèquement, la transmission de contenus vidéo nécessite un débit supérieur à celui nécessaire au simple envoi de messages textuels. De même, une application conversationnelle nécessitera une latence faible au contraire d'une application de diffusion de contenus audio ou vidéo.

Pour ces raisons, il est important de mettre en oeuvre une méthode automatique de sélection du média le plus adapté aux besoins de l'utilisateur et qui prenne également en compte la disponibilité de chaque média qui peut être congestionné par une application utilisant toute la ressource en débit disponible ou perturbé par des conditions de propagation difficiles.

Le document FR 2 922 397 décrit une sélection automatique de média de transmission dans un réseau de transmission comprenant une base de données contenant une pluralité de profils de routage, chaque profil indique un rang de préférence pour chaque support de transmission.

Un des problèmes que cherche à résoudre l'invention est de rendre automatique la sélection du type de média de transmission en fonction des besoins de communication. Dans le contexte naval, une solution connue consiste à utiliser une décision humaine, par l'intermédiaire d'un opérateur radio, pour effectuer la prise de décision. En pratique, cet opérateur radio configure une matrice de connections qui relient, à un instant donné, un utilisateur au média de transmission le plus opérationnel et qui répond au mieux aux besoins de l'utilisateur.

Cette solution présente l'inconvénient majeur d'être peu efficace car non automatique et nécessite une remise à jour permanente des circuits qui relient les terminaux à chaque système de communication sans fil

D'autres solutions de routage automatique des paquets transmis existent mais elles ne prennent pas en compte les caractéristiques de chaque système de communication et de chaque média de transmission afin d'offrir les meilleures performances en termes de qualité de service pour un utilisateur et une application donnée.

Dans la suite de la description, le terme média de transmission est utilisé pour désigner le lien physique entre la source et le destinataire d'un paquet et plus particulièrement un lien sans fil. Les termes systèmes de transmission et ressources de communication désignent les équipements émetteur/récepteur permettant de transmettre des données sur un média de transmission.

La présente invention propose une solution de sélection automatique des ressources de communication la plus appropriée en fonction de différents critères tels le type d'application, le type d'utilisateur, la disponibilité du média de transmission, son débit et sa latence.

L'invention a notamment pour avantage de permettre d'exploiter l'ensemble des ressources de communications disponibles et de les répartir au mieux en fonction des besoins et des priorités. Elle permet, de plus, une compatibilité avec les architectures de réseau basées sur le protocole de communication IP (« Internet Protocol »).

A cet effet, l'invention a pour objet un procédé de sélection automatique de média de transmission dans une infrastructure de communication comportant au moins un réseau local au travers duquel une pluralité d'applications communiquent, un routeur et une pluralité de systèmes de communications permettant auxdites applications de communiquer sur lesdits média de transmission par envoi de paquets de données, ledit procédé étant caractérisé en ce qu'il comprend au moins les étapes suivantes:
o Appliquer au moins une règle de routage de façon à sélectionner le média sur lequel transmettre ledit paquet en fonction d'au moins un des critères parmi les suivants: le type d'application, la longueur ou l'adresse source dudit paquet,
o Si aucune règle de routage n'est applicable audit paquet, sélectionner le média sur lequel transmettre ledit paquet à l'aide d'une table de routage contenant, pour chaque système de communication disponible au sein de ladite infrastructure, une valeur de coût dudit média de transmission associé, le média sélectionné étant celui qui présente le coût de routage le plus faible,
o Mettre à jour ladite table de routage à l'aide d'un protocole de routage et d'une fonction de calcul du coût de routage de chaque média de telle sorte que ledit coût a une valeur inversement proportionnelle au débit de transmission disponible sur ledit média, proportionnelle à la latence de transmission sur ledit média, ledit protocole de routage (305, 306) étant un protocole de routage statique (305) pour un débit de transmission disponible sur ledit média (301, 302, 303) inférieur à une valeur (304) seuil de débit donnée D et un protocole de routage dynamique (306) dans le cas contraire,
o Appliquer au moins une règle de gestion de la qualité de service audit paquet par l'intermédiaire d'un filtrage dont la fonction est de supprimer ledit paquet si les caractéristiques dudit média ne permettent pas de garantir le bon fonctionnement de l'application associée audit paquet.

Dans une variante de réalisation de l'invention, ladite valeur seuil de débit D est égale à 64 kilobits par seconde.

Dans une variante de réalisation de l'invention, ledit réseau local est un réseau IP et lesdits paquets de données respectent le protocole IP.

Dans une variante de réalisation de l'invention, ledit protocole de routage dynamique est le protocole OSPF.

Dans une variante de réalisation de l'invention, lesdits systèmes de communications sont choisis parmi les systèmes suivants: un système de transmission Haute Fréquence (HF), un système de transmission Ultra Haute Fréquence (UHF), un système de transmission par satellite et/ou un système de communication sans fils WIMAX.

L'invention a également pour objet un système de transmission comprenant au moins un réseau local au travers duquel une pluralité d'applications communiquent, un routeur et une pluralité de systèmes de communications permettant auxdites applications de communiquer sur lesdits média de transmission par envoi de paquets de données, ledit système étant caractérisé en ce que ledit routeur comporte des moyens pour exécuter les étapes du procédé de sélection de média de transmission décrit précédemment.

L'invention a également pour objet une utilisation du procédé décrit précédemment pour une infrastructure embarquée sur un bateau.

D'autres caractéristiques apparaîtront à la lecture de la description détaillée donnée à titre d'exemple et non limitative qui suit faite en regard de dessins annexés qui représentent :
La figure 1, un schéma décrivant un exemple d'architecture d'un système mettant en oeuvre le procédé de sélection selon l'invention,
La figure 2, un diagramme schématisant les étapes du procédé de sélection automatique selon l'invention,
La figure 3, un schéma illustrant un scénario d'application du procédé de sélection dans un contexte naval.

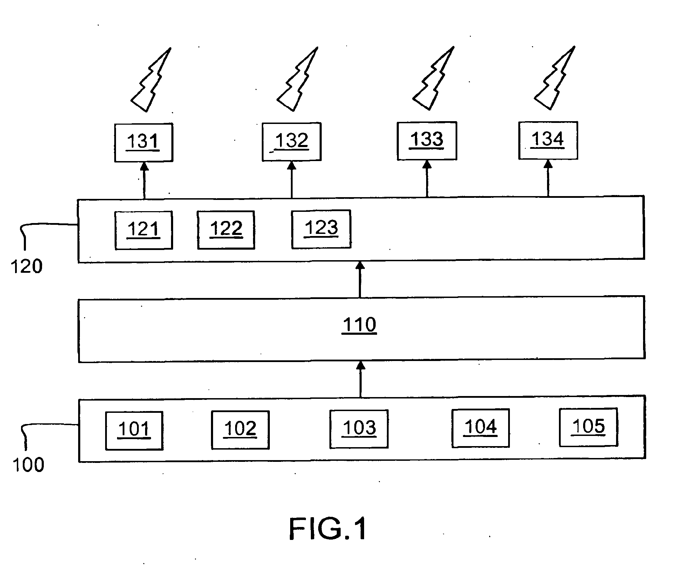

La figure 1 représente un exemple d'architecture d'un système mettant en oeuvre le procédé de sélection de média de transmission selon l'invention. Cette architecture comprend notamment une couche applicative 100 qui met en oeuvre différentes applications de communication, par exemple une application de visioconférence 101, une application d'audioconférence 102, une application de courriers électroniques 103, une application 104 permettant d'accéder à une page internet via le protocole http ou encore une application de messagerie instantanée 105. La couche applicative 100 est connectée à un réseau local 110 de type IP (« Internet Protocol ») elle-même reliée à un routeur 120. Le routeur 120 comporte au moins un module de gestion de la qualité de service 121 et un module 122 de type PBR pour « Policy-Based Routing » en anglais dont la fonction est de prendre des décisions sur le routage basées sur des critères extérieurs au réseau lui-même. Enfin, le routeur 120 comporte également un module 123 de sélection du média de transmission selon l'invention, ce module permet de diriger les paquets de données émis au niveau de la couche applicative 100 vers l'un des émetteurs disponibles qui implémentent un type de transmission différent. Les systèmes de communication possibles sont par exemple, un système de transmission Haute Fréquence (HF) 131, un système de transmission Ultra Haute Fréquence (UHF) 132, un système de transmission par satellite 133 ou encore un système de communication sans fils de type WIMAX (« Worldwide Interoperability for Microwave Access »).

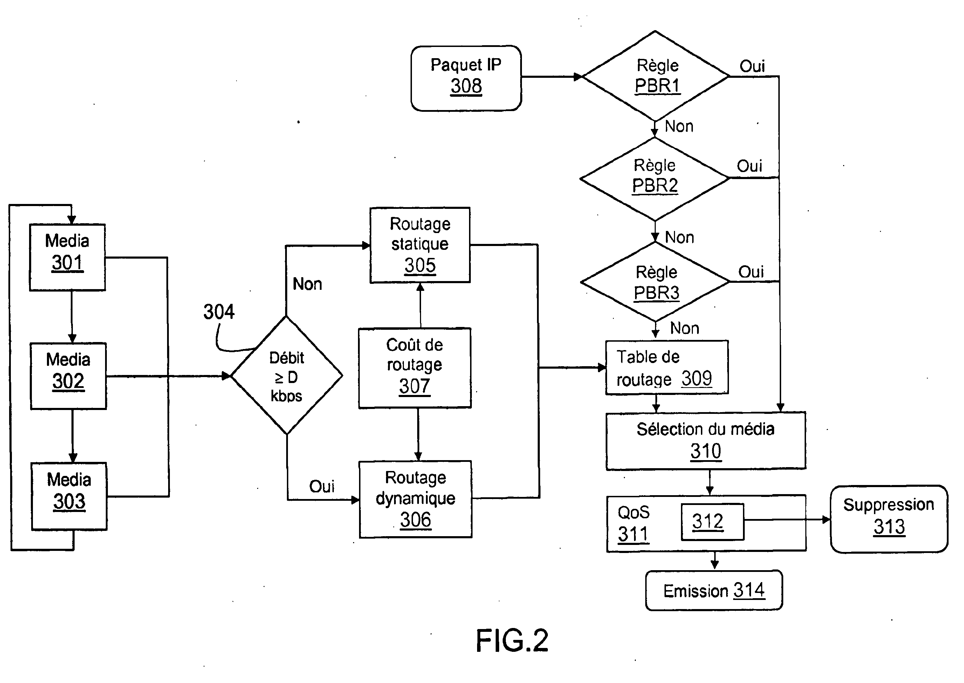

La figure 2 schématise un diagramme du séquencement des étapes de mise en oeuvre du procédé selon l'invention. L'invention a notamment pour objet la sélection du type de média de transmission 131, 132, 133, 134 pour chaque paquet de données, par exemple un paquet IP, à transmettre. Un paquet IP 308, caractérisé notamment par le type de protocole de transport qu'il véhicule, sa longueur ainsi que les adresses source et destination du message qu'il contient est soumis à une succession de tests d'applicabilité de règles de routage et/ou de traitement PBR1, PBR2, PBR3. Ces règles sont basées sur la technique connue de routage « Policy-Based Routing ». Cette technique permet de router des paquets pas uniquement sur la base de leur destination, comme cela est le cas traditionnellement dans les problématiques de routage, mais aussi sur la base d'autres critères comme le type d'applicatif contenu dans le paquet 308, sa longueur ou son adresse source. Plusieurs règles PBR1, PBR2, PBR3 peuvent être implémentées en leur donnant une priorité croissante. Si la règle PBR1 est applicable au paquet IP 308 alors ce dernier est transmis à un module 310 de sélection du média de transmission selon l'invention. Dans le cas contraire, le paquet IP 308 est soumis à une deuxième règle PBR2 et ainsi de suite jusqu'à épuisement de la liste des règles disponibles.
Si aucune des règles PBR1, PBR₂, PBR3 n'est applicable au paquet IP 308 alors il est routé vers sa destination grâce aux informations contenues dans une table de routage 309 qui indique ensuite au module de sélection 310 quel est le système de transmission élu pour transmettre le paquet IP 308. Une fois le média de transmission sélectionné, un dernier module 311 de gestion de la qualité de service, ou QoS pour « Quality of Service » en anglais, permet d'assurer une qualité de transmission suffisante pour certains types d'applications. Ce module effectue un filtrage 312 du paquet IP 308 reçu qui aboutit éventuellement à sa suppression 313 si le média sélectionné pour transmettre ce paquet ne possède pas les caractéristiques suffisantes pour assurer une transmission des données contenues dans ce paquet avec une qualité minimum. Par exemple, une application de vidéoconférence nécessite un débit de transmission minimum pour assurer un fonctionnement correct de la communication. A cet effet, un système de transmission HF, qui présente intrinsèquement un débit de transmission faible, de l'ordre de quelques kilobits par seconde, n'est pas suffisant pour transmettre des contenus vidéo. Si le paquet IP 308 n'est pas filtré par le module de gestion de la qualité de service 311, il est ensuite émis 314 sur le média sélectionné précédemment par le module 310.

La table de routage 309 est mise à jour pour chaque type de média de transmission 301, 302, 303 disponible afin de configurer le protocole de routage des paquets transmis en fonction des caractéristiques de chaque média. Les systèmes de communication disponibles sont classés les uns par rapport aux autres en spécifiant un poids à chaque route contenue dans la table de routage 309. Le débit de transmission est pris en compte et comparé à une valeur seuil D lors d'une étape de test 304. Une valeur caractéristique de D est 64 kilobits par seconde car en dessous de ce débit il n'est pas souhaitable d'utiliser un protocole de routage dynamique qui nécessite un flux de signalisation important contrairement au routage statique. Si le débit disponible est strictement inférieur à D, un routage statique 305 est donc appliqué pour mettre à jour la table de routage. Dans le cas contraire, on utilise un protocole de routage dynamique 306, par exemple le protocole connu OSPF (« Open Shortest Path First »). Ce protocole de routage dynamique 306 est adapté en fonction du média de transmission 301, 302, 303. En particulier des messages de sondage sont utilisés pour mettre à jour le poids relatif de chaque chemin et détecter, par exemple, une perte de disponibilité d'un média de transmission. Ces messages ont pour fonction de sonder une route donnée afin de vérifier qu'elle est accessible. Ils sont transmis périodiquement avec un intervalle de temps entre deux messages qui dépend du débit disponible. Cet intervalle de sondage est adapté en fonction du débit supporté par chaque média de communication de façon à éviter une occupation trop importante de la bande passante par les messages émis par le protocole de routage.
Le protocole de routage dynamique 306 est configuré à l'aide d'une fonction 307 de calcul du coût de routage du média de transmission. Cette fonction calcule un poids associé à chaque média en fonction de différents critères, notamment le débit disponible, la latence de transmission et le prix si l'accès à un média nécessite un abonnement. Le calcul 307 du coût du routage est également effectué pour le routage statique en affectant pour ce cas le coût le plus élevé. La table de routage 309 est ensuite mise à jour pour chaque média de transmission 301, 302, 303 avec les informations issues des deux protocoles de routage 305,306 utilisés. Cette table 309 contient pour chaque route reliant une source à une destination au sein du réseau considéré, une métrique permettant de classer les différentes routes possibles en fonction de leur coût précédemment déterminé.

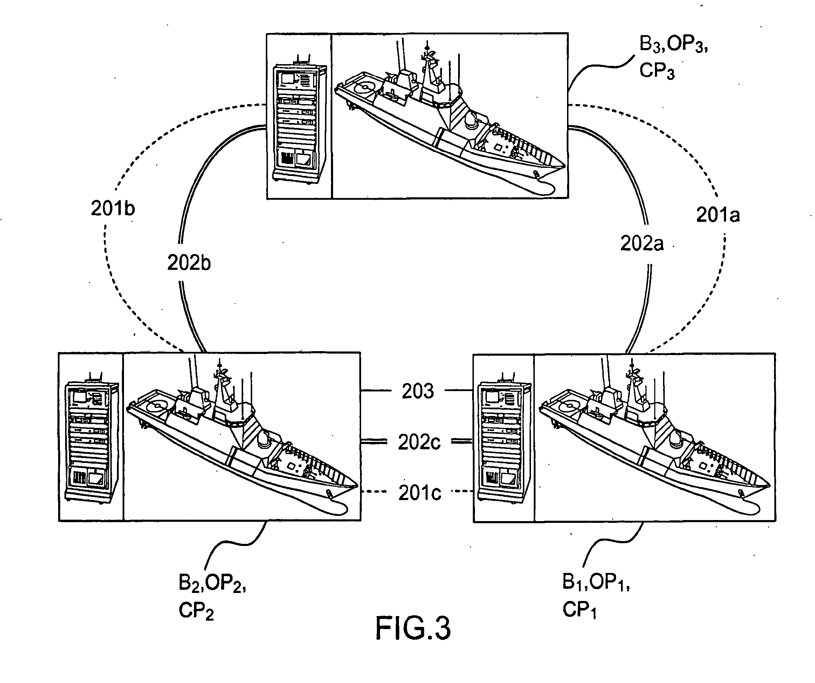

La figure 3 illustre un exemple d'application du procédé selon l'invention dans un contexte naval. Cet exemple n'est nullement limitatif et a pour but d'illustrer l'application de l'invention par des scénarios de mise en oeuvre concrets.

Trois bateaux B1, B2, B3 communiquent entre eux par l'intermédiaire de plusieurs moyens de transmission sans fils. Les trois bateaux B1, B2, B3 sont chacun équipés d'une liaison Haute Fréquence (HF) 201 a, 201 b, 201 c et d'une liaison Ultra Haute Fréquence (UHF) 202a, 202b, 202c. Deux des trois bateaux, B1 et B2 sont également équipés de systèmes de communication par satellite 203 par l'intermédiaire desquels ils peuvent également communiquer. Chacun des bateaux comprend à son bord deux utilisateurs ayant accès aux ressources de communication. Un premier utilisateur est un opérateur OP1, OP2, OP3 et un second utilisateur, plus prioritaire que le premier est, par exemple, le capitaine du bateau, CP1, CP2, CP3.

Le procédé de sélection selon l'invention est appliqué sur chaque bateau en prenant en compte deux règles PBR par priorité croissante. La première règle PBR1 consiste à diriger tous les paquets véhiculant une application de messagerie instantanée vers la liaison HF. La seconde règle PBR2 consiste à diriger tous les paquets provenant de l'adresse source allouée au capitaine du bateau vers la liaison satellite car cette dernière bénéficie d'un meilleur temps de réponse.

La fonction 307 de calcul de coût de routage selon l'invention classe les trois types de systèmes de communication disponibles en fonction de plusieurs critères. Le coût de média le plus faible est affecté à la liaison UHF 202a, 202b, 202c car elle offre un débit de transmission important ainsi qu'un accès non payant. Un coût de média intermédiaire est affecté à la liaison satellite 203 car, bien qu'offrant le meilleur débit, elle présente un accès payant, un critère financier peut également à ce titre être pris en compte dans le calcul du coût de routage. Enfin un coût de média élevé est associé à la liaison HF 201 a, 201 b, 201 c car cette liaison offre le débit le plus faible.

Enfin une règle de qualité de service QoS1 est utilisée pour configurer le module de gestion de la qualité de service 311. Cette règle consiste à interdire la liaison HF, qui possède un débit trop faible, aux transmissions de contenu vidéo tel qu'une visioconférence.

Plusieurs scénarios d'application peuvent être envisagés. Dans un premier scénario, l'opérateur OP1 situé sur le bateau B1 communique avec l'opérateur OP3 situé sur le bateau B3 par l'intermédiaire d'une application de messagerie instantanée. La connectivité est possible par une liaison HF 201 a ou par une liaison UHF 202a. Le procédé selon l'invention est appliqué conformément aux étapes décrites à l'appui de la figure 2. La règle PBR1 est applicable aux paquets transmis qui sont dirigés vers le système de transmission HF du bateau B1 même si les règles de routage indiquent un coût de routage moindre pour la liaison UHF. La règle PBR1 est à cet effet prioritaire. Aucune règle de gestion de la qualité de service n'est applicable dans ce cas donc les paquets sont transmis à leur destination via la liaison HF 201a.

Dans un deuxième scénario, l'opérateur OP1 consulte une page internet située sur un serveur hébergé par un équipement utilisé par l'opérateur OP2 situé sur le bateau B2. Les trois liaisons 201 c, 202c, 203 sont disponibles et permettent la connectivité, la session démarre donc en utilisant la liaison UHF 202c qui est celle de moindre coût selon la table de routage 309. Le capitaine CP1 souhaite accéder au même serveur situé sur B2, le procédé selon l'invention lui attribue alors la ressource satellite 203 par application de la règle PBR2.

Dans un troisième scénario, les deux bateaux B1 et B2 s'éloignent l'un de l'autre de telle sorte que la connectivité UHF n'est plus assurée. Le procédé selon l'invention fait alors transiter la communication entre l'opérateur OP1 et l'opérateur OP2, établie lors du deuxième scénario, vers la liaison satellite selon les règles de routage établies. La liaison entre le capitaine CP1 et l'opérateur OP2 reste inchangée.

Dans un quatrième scénario, une panne d'équipements satellite intervient sur le bateau B2, le lien 203 correspondant n'est donc plus disponible. Par ailleurs les bateaux B1 et B2 sont toujours trop éloignés pour pouvoir rétablir la connectivité UHF. Dans ce cas les règles de routage impliquent une utilisation de la seule liaison encore disponible, la liaison HF 201 a.

Dans un cinquième scénario, le capitaine CP1 souhaite effectuer une visioconférence avec son homologue CP3. La seule liaison disponible entre les deux navires B1 et B3 est la liaison HF 201 a mais il n'est pas compatible d'une transmission vidéo. Le module de gestion de la qualité de service 311 supprime les paquets émis de façon à interdire le transfert de ce flux selon la règle de qualité de service QoS1.

## Revendications

1. Procédé de sélection automatique de média de transmission dans une infrastructure de communication comportant au moins un réseau local (110) au travers duquel une pluralité d'applications (100) communiquent, un routeur (120) et une pluralité de systèmes de communications (131, 132, 133, 134) permettant auxdites applications (100) de communiquer sur lesdits média de transmission par envoi de paquets (308) de données, ledit procédé étant **caractérisé en ce qu'**il comprend au moins les étapes suivantes:
o Appliquer au moins une règle de routage (PBR1, PBR2, PBR3) de façon à sélectionner (310) le média sur lequel transmettre ledit paquet (308) en fonction d'au moins un des critères parmi les suivants: le type d'application (101, 102, 103, 104, 105), la longueur ou l'adresse source dudit paquet (308),
o Si aucune règle de routage (PBR1, PBR2, PBR3) n'est applicable audit paquet (308), sélectionner (310) le média sur lequel transmettre ledit paquet (308) à l'aide d'une table de routage (309) contenant, pour chaque système de communication (131, 132, 133, 134) disponible au sein de ladite infrastructure, une valeur de coût de routage dudit média de transmission associé, le média sélectionné étant celui qui présente, dans ladite table de routage (309), le coût de routage le plus faible,
o Mettre à jour les valeurs de coût de routage des média de transmission dans ladite table de routage (309) à l'aide d'un protocole de routage (305, 306) et d'une fonction de calcul (307) du coût de routage de chaque média (301, 302, 303) de telle sorte que ledit coût a une valeur inversement proportionnelle au débit de transmission disponible sur ledit média, proportionnelle à la latence de transmission sur ledit média, ledit protocole de routage (305, 306) étant un protocole de routage statique (305) pour un débit de transmission disponible sur ledit média (301, 302, 303) inférieur à une valeur (304) seuil de débit donnée D et un protocole de routage dynamique (306) dans le cas contraire, la valeur la plus élevée étant affectée audit coût de routage lorsque le protocole de routage est un protocole de routage statique,
o Appliquer au moins une règle de gestion de la qualité de service (311) audit paquet (308) par l'intermédiaire d'un filtrage (312) dont la fonction est de supprimer (313) ledit paquet (308) si les caractéristiques dudit média (301, 302, 303) ne permettent pas de garantir le bon fonctionnement de l'application (101, 102, 103, 104, 105) associée audit paquet (308).

2. Procédé selon la revendication 1 **caractérisé en ce que** ladite valeur seuil (304) de débit D est égale à 64 kilobits par seconde.

3. Procédé selon l'une des revendications précédentes **caractérisé en ce que** ledit réseau local (110) est un réseau IP et lesdits paquets (308) de données respectent le protocole IP.

4. Procédé selon l'une des revendications précédentes **caractérisé en ce que** ledit protocole de routage dynamique (306) est le protocole OSPF.

5. Procédé selon l'une des revendications précédentes **caractérisé en ce que** lesdits systèmes de communications (131, 132, 133, 134) sont choisis parmi les systèmes suivants: un système de transmission Haute Fréquence (HF) (131), un système de transmission Ultra Haute Fréquence (UHF) (132), un système de transmission par satellite (133) et/ou un système de communication sans fils WIMAX (134).

6. Système de transmission comprenant au moins un réseau local (110) au travers duquel une pluralité d'applications (100) communiquent, un routeur (120) et une pluralité de systèmes de communications (131, 132, 133, 134) permettant auxdites applications (100) de communiquer sur lesdits média de transmission par envoi de paquets (308) de données, ledit système étant **caractérisé en ce que** ledit routeur (120) comporte des moyens pour exécuter les étapes du procédé de sélection de média de transmission selon l'une des revendications 1 à 5.

7. Utilisation du procédé selon l'une des revendications précédentes pour une infrastructure embarquée sur un bateau.

## Patentansprüche

1. Verfahren zum automatischen Auswählen von Übertragungsmedien in einer Kommunikationsinfrastruktur, die wenigstens ein lokales Netzwerk (110), durch das mehrere Anwendungen (100) kommunizieren, einen Router (120) und mehrere Kommunikationssysteme (131, 132, 133, 134) umfasst, die es zulassen, dass die Anwendungen (100) über die Übertragungsmedien durch Senden von Datenpaketen (308) kommunizieren, wobei das Verfahren **dadurch gekennzeichnet ist, dass** es wenigstens die folgenden Schritte beinhaltet:
∘ Anwenden von wenigstens einer Routingregel (PBR1, PBR2, PBR3), um das Medium auszuwählen (310), auf dem das Paket (308) gesendet werden soll, in Abhängigkeit von wenigstens einem der folgenden Kriterien: Anwendungstyp (101, 102, 103, 104, 105), Länge oder Quelladresse des Pakets (308);
∘ Auswählen (310), wenn keine Routingregel (PBR1, PBR2, PBR3) auf das Paket (308) anwendbar ist, des Mediums, auf dem das Paket (308) gesendet werden soll, anhand einer Routingtabelle (309), die für jedes in der Infrastruktur verfügbare Kommunikationssystem (131, 132, 133, 134) einen Routingkostenwert für das assoziierte Übertragungsmedium enthält, wobei das gewählte Medium dasjenige mit den niedrigsten Routingkosten in der Routingtabelle (309) ist;
∘ Aktualisieren der Routingkostenwerte der Übertragungsmedien in der Routingtabelle (309) anhand eines Routingprotokolls (305, 306) und einer Funktion (307) zum Berechnen der Routingkosten jedes Mediums (301, 302, 303), so dass der Wert der Kosten umgekehrt proportional zu der auf dem Medium verfügbaren Übertragungsrate und proportional zur Übertragungslatenz auf dem Medium ist, wobei das Routingprotokoll (305, 306) ein statisches Routingprotokoll (305) für eine auf dem Medium (301, 302, 303) verfügbare Datenrate, die kleiner als ein Schwellenwert (304) der Datenrate D ist, und andernfalls ein dynamisches Routingprotokoll (306) ist, wobei der höchste Wert den Routingkosten zugeordnet wird, wenn das Routingprotokoll ein statisches Routingprotokoll ist;
∘ Anwenden von wenigstens einer Dienstequalitäts-Managementregel (311) auf das Paket (308) durch eine Filterung (312), deren Zweck darin besteht, das Paket (308) zu unterdrücken (313), wenn die Charakteristiken des Mediums (301, 302, 303) es nicht zulassen, den ordnungsgemäßen Betrieb der mit dem Paket (308) assoziierten Anwendung (101, 102, 103, 104, 105) zu garantieren.

2. Verfahren nach Anspruch 1, **dadurch gekennzeichnet, dass** der Schwellenwert (304) für die Datenrate D 64 Kilobit pro Sekunde beträgt.

3. Verfahren nach einem der vorherigen Ansprüche, **dadurch gekennzeichnet, dass** das lokale Netzwerk (110) ein IP-Netwerk ist und die Datenpakete (308) das IP-Protokoll einhalten.

4. Verfahren nach einem der vorherigen Ansprüche, **dadurch gekennzeichnet, dass** das dynamische Routingprotokoll (306) das OSPF-Protokoll ist.

5. Verfahren nach einem der vorherigen Ansprüche, **dadurch gekennzeichnet, dass** die Kommunikationssysteme (131, 132, 133, 134) aus den folgenden Systemen ausgewählt werden: einem Hochfrequenz-(HF)-Übertragungssystem (131), einem Ultrahochfrequenz-(UHF)-Übertragungssystem (132), einem Satellitenübertragungssystem (133) und/oder einem drahtlosen WIMAX-Kommunikationssystem (134).

6. Übertragungssystem, das wenigstens ein lokales Netzwerk (110), über das mehrere Anwendungen (100) kommunizieren, einen Router (120) und mehrere Kommunikationssysteme (131, 132, 133, 134) umfasst, mit dem die Anwendungen (100) über die Übertragungsmedien durch Senden von Datenpaketen (308) kommunizieren können, wobei das System **dadurch gekennzeichnet ist, dass** der Router (120) Mittel zum Ausführen der Schritte des Verfahrens zum Auswählen von Übertragungsmedien nach einem der Ansprüche 1 bis 5 umfasst.

7. Anwenden des Verfahrens nach einem der vorherigen Ansprüche für eine Infrastruktur an Bord eines Schiffes.

## Claims

1. A method for the automatic selection of transmission media in a communication infrastructure comprising at least one local network (110) through which a plurality of applications (100) communicate, a router (120) and a plurality of communication systems (131, 132, 133, 134) allowing said applications (100) to communicate over said transmission media by sending data packets (308), said method being **characterised in that** it comprises at least the following steps:
∘ applying at least one routing rule (PBR1, PBR2, PBR3) so as to select (310) the media on which said packet (308) is to be transmitted as a function of at least one of the following criteria: the application type (101, 102, 103, 104, 105), the length or the source address of said packet (308);
∘ selecting (310), if no routing rule (PBR1, PBR2, PBR3) is applicable to said packet (308), the media on which said packet (308) is to be transmitted by using a routing table (309) that contains, for each communication system (131, 132, 133, 134) that is available within said infrastructure, a routing cost value for said associated transmission media, with the selected media being the one with the lowest routing cost in said routing table (309);
∘ updating the routing cost values of said transmission media in said routing table (309) using a routing protocol (305, 306) and a function (307) for computing the routing cost of each media (301, 302, 303) so that the value of said cost is inversely proportional to the transmission rate available on said media, proportional to the transmission latency on said media, said routing protocol (305, 306) being a static routing protocol (305) for a transmission rate available on said media (301, 302, 303) that is below a data rate D threshold value (304) and otherwise being a dynamic routing protocol (306), with the highest value being assigned to said routing cost when the routing protocol is a static routing protocol;
∘ applying at least one quality of service (311) management rule to said packet (308) by means of filtering (312), the purpose of which is to suppress (313) said packet (308) if the characteristics of said media (301, 302, 303) do not allow the proper operation of the application (101, 102, 103, 104, 105) associated with said packet (308) to be guaranteed.

2. The method according to claim 1, **characterised in that** said data rate D threshold value (304) is 64 kilobits per second.

3. The method according to any one of the preceding claims, **characterised in that** said local network (110) is an IP network and said data packets (308) follow the IP protocol.

4. The method according to any one of the preceding claims, **characterised in that** said dynamic routing protocol (306) is the OSPF protocol.

5. The method according to any one of the preceding claims, **characterised in that** said communication systems (131, 132, 133, 134) are selected from the following systems: a High Frequency (HF) transmission system (131), an Ultra High Frequency (UHF) transmission system (132), a satellite transmission system (133) and/or a WIMAX wireless communication system (134).

6. A transmission system comprising at least one local network (110) through which a plurality of applications (100) communicate, a router (120) and a plurality of communication systems (131, 132, 133, 134) allowing said applications (100) to communicate on said transmission media by sending data packets (308), said system being **characterised in that** said router (120) comprises means for executing the steps of the method for the selection of transmission media according to any one of claims 1 to 5.

7. The use of the method according to any one of the preceding claims for an infrastructure on board a ship.
